# EUROPEAN PATENT APPLICATION

(11) **EP 0 639 332 A2**
(43) Date of publication of application: **22.02.1995**
(21) Application number: 94305587.1
(22) Date of filing: 28.07.1994
(51) Int. Cl.: A23C 19/05, A23C 19/032, A23C 19/072

(54) **Method for manufacture of reduced fat cheddar cheese**

(30) Priority: 20.08.1993 US 110413
(71) Applicant: KRAFT FOODS, INC., White Plains New York 10625 (US)
(72) Inventor: Nauth, Kaiser Rajinder, Wheeling Illinois 60090 (US); Reddy, Divya Shree, Lake Zurich Illinois 60047 (US)
(74) Representative: Eyles, Christopher Thomas

(57) **Abstract**

The present invention is directed to a method for making a higher moisture, reduced fat natural cheddar-type cheese product from partially or wholly fat reduced milk. The cheddar-type cheese product of the present invention has from about 45% to about 58% moisture and from about 1.3% to about 15% butterfat. In the method of the invention for making a reduced fat natural cheddar-type cheese, milk is standardized in fat content to produce a milk substrate having from about 0.05% to about 2% milkfat. A culture system is added to the standardized milk. The culture system comprises a lactic acid starter culture and a ropy culture. Thereafter, the milk is fermented and set with a milk coagulating enzyme. The coagulum is cut to provide curd particles and whey and the curd particles are cooked in the whey at a temperature below the optimum growth temperature of the ropy culture. The whey is drained from the curd and the curd is rinsed, salted and filled into containers. The curd is pressed and vacuumed to remove additional whey, the container is sealed and the curd is cooled in the container. Thereafter, the curd blocks are cured to provide a natural cheddar type cheese product having a reduced fat level which is from about 40% to about 60% of the fat level of conventional cheddar-type cheese products.

## Description

### Field of the Invention

The present invention relates generally to a method for making a reduced fat or low fat natural cheese from reduced fat milk or skim milk. More particularly, the present invention is directed to producing a natural cheese product having from about 40% to about 98% reduced fat as compared to conventional cheddar cheese type products.

### Background of the Invention

The health advantages in reducing the fat content of various food products has long been recognized. When fat in cheese is reduced significantly, the composition of cheese changes and the body, texture and flavor are negatively impacted. A reduced fat cheese has higher protein and moisture and the incidence of bitterness in such a product is higher. Even with the higher moisture in lower fat cheese, the mouthfeel and texture is coarse and dry. Natural cheese made from skim milk is very firm, inelastic, has a dry mouthfeel and does not dissolve in the mouth.

American style cheese, such as cheddar cheese and colby, is a particularly popular cheese and vast quantities of cheddar cheese are produced and sold each year. It would be highly desirable to produce a reduced fat natural cheddar cheese type product which has a body, texture and flavor comparable to natural, full-fat cheddar cheese. When the fat content of milk is reduced to a level such that a 33% reduction of fat in the finished cheese is attained, the body, texture and flavor of the natural cheese produced from the milk is not too severely compromised. At levels of fat reduction above about 40%, however, the deterioration in body, texture and flavor and the increase in bitterness is readily noticeable.

The present invention is directed to producing a natural American style cheese product from milk which has a reduced level of fat such that the final natural cheddar-type cheese product has less than about 40% of the normal fat content of cheddar cheese and has up to about 98% less fat content than the normal fat content.

There are several known methods for producing cheddar-type cheese products.

In one method for the manufacture of cheddar cheese, a batch of milk is placed in a cheese vat and is inoculated with a lactic acid starter. After the desired degree of lactic acid development has been attained, rennet is added to set or coagulate the milk. When the resulting curd has attained the proper degree of firmness, the curd is cut into cubes with curd knives. The curd is then agitated in the whey and heated to a temperature of about 100°F to about 105°F (about 37°C to about 41°C), the heating of the curd to the desired temperature, preferably takes place over a period of about 30 minutes. The curd is held at this temperature and agitation of the curd is continued until the acidity of the whey reaches about .13 to .16, expressed as percent lactic acid or its equivalent, at which time the heating is terminated and the whey is drained from the cheese vat. Usually, the temperature is maintained for about one hour. The mass of curd is then formed or "ditched" to facilitate whey drainage.

The curd is then allowed to knit and drain after which it is cut into block or slabs which are turned on the bottom of the vat. After about one hour, the slabs are stacked, cut and restacked by hand during which time acidity of the curd increases and further amounts of whey are expelled from the curd. The cutting, turning and stacking of the cheese curd in the cheese vat is known as "cheddaring". Cheddaring is usually continued for a period of about two hours until the desired knit and smoothness of curd is achieved. The cheese curd is then milled into small pieces which may be washed, after which the curd is salted with an amount of salt to provide a total salt content of from about 1.65 to 1.9 percent by weight of the curd. The salted curd is then placed in hoops and pressed overnight. The pressed curd is then wrapped and cured until the desired flavor characteristics are attained.

Full fat cheddar cheese has a fat content of at least about 50% on a dry matter basis and has no more than 39% moisture. After the moisture of the curd has been reduced to less than about 30%, the cheddar curd containing 50% fat, dry basis, does not undergo any further syneresis or expulsion of whey.

Washed curd (or soaked curd) cheese is a semisoft to slightly firm cheese that is made in the same way as cheddar except that the milled curd is washed with water before it is salted. "Soaked curd" usually indicates a longer washing period than "washed curd". The curd is matted and milled as in making cheddar. Then water is added, and the curd is stirred in the water for several minutes, or as long as half an hour, as it cools. Part of the whey is extracted, and water is absorbed by the curd during this process. Then the curd is drained, salted and pressed as in the cheddar process.

Washing the curd increases the moisture content of the cheese, reduces the lactose content and final acidity, decreases body firmness and increases openness of texture. Washed curd cheese does not keep as well as cheddar. Usually it is cured for only 1 or 2 months. If it is made from raw milk it must be cured for at least 60 days unless it is to be used in manufacturing.

The final analysis of washed curd cheese is: moisture 40% (not more than 42%), fat in the solids, not less than 50%, and salt, 1.4% to 1.8%.

In the known methods for producing cheddar-type cheese products, an intermediate cooking temperature is used after the coagulum is cut to produce curd and whey. Such intermediate temperatures are generally in the range of from about 100° F. to about 105° F. (37 C. - 41° C.) Consequently, mesophilic (moderate temperature loving) microorganisms are used in the manufacture of cheddar cheese to produce lactic acid during the fermentation. Such mesophilic lactococci, typically include *S. lactis* and *S*. *cremoris*. High temperature loving (thermophilic) lactococci, such as *Streptococcus salivarius* subsp. *thermophilus* have not been used in the manufacture of cheddar-type cheese, since such thermophilic lactococci do not readily grow at the temperatures utilized in the manufacture of cheddar-type cheese.

The present invention is directed to producing a natural cheddar-type cheese having a reduced level of fat, but which retains a non-bitter flavor and a body and texture associated with full fat natural cheddar-type cheese. In the method of the invention, a culture system is utilized to attain a close-knit, smooth cheddar-type cheese character and characteristic attributes with good flavor and lack of bitterness.

### Summary of the Invention

The present invention is directed to a method for making a higher moisture, reduced fat natural cheddar-type cheese product from partially or wholly fat reduced milk. The cheddar-type cheese product of the present invention has from about 45% to about 58% moisture and from about 1.3% to about 15% butterfat. All percentages used herein are by weight unless otherwise indicated. In the method of the invention for making a reduced fat natural cheddar-type cheese, milk is standardized in fat content to produce a milk substrate having from about 0.05% to about 2% milkfat. A culture system is added to the standardized milk. The culture system comprises a lactic acid starter culture and a ropy culture. Thereafter, the milk is fermented and set with a milk coagulating enzyme. The coagulum is cut to provide curd particles and whey and the curd particles are cooked in the whey at a temperature below the optimum growth temperature of the ropy culture. The whey is drained from the curd and the curd is rinsed, salted and filled into containers. The curd is pressed and vacuumed to remove additional whey, the container is sealed and the curd is cooled in the container. Thereafter, the curd blocks are cured to provide a natural cheddar type cheese product having a reduced fat level which is from about 40% to about 98% less than the fat level of conventional cheddar-type cheese products.

### Detailed Description of the Invention

Generally, in accordance with the invention, cows milk is processed to provide a reduced fat milk substrate having from about 0.05% to about 2% of milkfat. All percentages used herein are by weight unless otherwise indicated. The reduced fat milk substrate is pasteurized at suitable time and temperature conditions, such as 163°F (72.8°C) for a 16 to 18 second hold time. After pasteurization, the milk substrate is delivered to vats at a temperature of from about 85°F to about 92°F (about 29.4°C to about 33.3°C).

Thereafter, the culture system of the invention is added to the milk. The culture system comprises a mesophilic lactic acid producing culture, such as *S. lactis* and a viscosity causing ropy culture. Ropy or slimy milk of bacterial origin is well known in the dairy industry and is a condition that is sought to be avoided in cheese products, although certain dairy beverage products utilize ropy cultures. The ropiness may be evident only as a slightly abnormal viscosity or it may so pronounced that the affected milk may be drawn out in fine threads a yard (0.91 m) long, and in some instances, may assume a gel-like consistency.

The immediate cause of the ropy or slimy condition is the bacterial formation of gums or mucins. The gums are the more common cause. These are probably galactans produced by the fermentation of lactose and may contain varying ratios of galactose, glucose and rhamnose. Some of the active peptonizing bacteria produce sliminess by the formation of mucins, which are combinations of proteins with a carbohydrate moiety. The development of sliminess is closely associated with capsule formation. The ability to produce ropy milk by bacteria is readily acquired and lost by the bacteria.

The flavor of ropy milk, unless the effect is associated with a lactic fermentation, is indistinguishable from that of normal milk; nor is the milk unwholesome in any way. Nevertheless, the development of ropiness in raw milk is actively avoided. Ropiness is generally considered to be a defect in milk because it makes processing difficult. Accordingly, the use of a ropy culture in the culture system of the present invention is predicated on the careful control of the cheese making process, and the propagation of the ropy culture.

The term "ropy culture" is well understood in the dairy industry. Ropy cultures can be provided from most genera of microorganisms used in the preparation of milk products. The ropy culture for the preparation of natural cheddar-type cheese of the invention is selected from cultures varying from thermophilic to meosphilic microorganisms. Cheddar cheese is cooked at temperatures of 37°-41° C. Certain ropy cultures have an optimum growth in the temperature range of 39° C. - 45° C. Such cultures are generally thermophilic cocci, such as *Streptococcus salivarius* subsp. *thermophilus* and *Lactobacillus delbrueckii ssp*. *bulgaricus*. Ropy cultures can also be provided from mesophilic microorganisms. Suitable species include *Streptococcus lactis ssp. hollandicus* and *Leuconostoc mesenperoidis ssp*. *dextranicum*. The protocol for preparation of ropy cultures as a bulk starter must be carefully controlled. In one method for preparation of an *S. thermophilus* bulk starter, a 10% non-fat dry milk substrate is heat treated at 190-200°F (87.8-93.3°C) for 90 minutes. The non-fat dry milk substrate is cooled to 98°F (36.7°C) and inoculated with an *S*. *thermophilus* culture at a level of 10 ml of culture per 100 gallons (378.5 liters) of non-fat dry milk medium. The medium is held at a temperature between 98°F and 102°F (36.7°C and 38.9°C) for a period of 16 to 18 hours or until a target pH and percent total acidity of 4.95 - 5.10 and 0.55 - 0.45, respectively is attained. The bulk starter is then chilled and held until use.

When it is desired to prepare a reduced fat natural cheddar cheese, 1% of the ropy *S. thermophilus* and *L*. *bulgaricus* bulk starter culture is added at an appropriate time to the reduced fat milk being prepared into a natural cheddar-type cheese product.

Additional cultures and enzymes which have proteolytic and lipolytic activity may optionally be added to cheese milk to produce a cheese which is elastic and has desirable body, texture and cheese flavor. Examples of such cultures and enzymes are disclosed in U.S. Patent No. 3,975,544 to Kosikowski.

The ropy culture grow in numbers during cheesemaking and interact with the milk protein system to hold water in such a manner that the resulting cheese is pliable, elastic, soft and has no dry mouthfeel. The inclusion of conventional mesophilic lactococci helps the cheesemake and development of characteristic cheese flavor. Proteolytic and lipolytic cultures are used to cause the presence of a variety of protein and peptide fractions which is believed to result in the flavor potential of no fat/low fat cheese. *Lactobacillus casei* cultures may be added because they can slowly grow at the curing temperature (40-55°F [4.4-12.8°C]) of cheese and are known to utilize the smaller protein fractions present in cheese to affect cheese flavor positively.

The R2 enzyme preparation is added to cause lipolysis (fat breakdown) of the small amount of fat present in milk. The T3 and LB7 culture concentrates are homogenized to rupture these cells and release their intracellular enzymes (proteinases, peptidases and other enzymes). Cheeses made with the cultures and culturing systems described above have produced cheese with desirable attributes.

In cheese containing no fat (1.3%) or very low fat <6.0%), the concentration of protein (casein) is high relative to fat. This causes the cheese to have dry mouthfeel even at high moisture levels (55% to 60%). By including ropy cultures, the manner in which the moisture is held in cheese is altered and the cheese becomes softer and more pliable. It is theorized that the viscosity causing component(s) elaborated during culture growth in cheesemaking interacts with milk proteins to keep them hydrated and dispersed in a way similar to milkfat globules.

In regular cheese making and curing, the ripening process is governed by the naturally occurring and surviving organisms. In this invention, body, texture and flavor are developed more consistently via directed curing by the addition of defined elements mentioned above.

The ropy culture and a lactic acid producing culture, such as *S. lactis*, are added to the reduced fat milk which has been introduced into a vat at a temperature of between about 87°F and 89°F (about 30.6°C and 31.7°C). The milk is ripened for a period of about 30 minutes and a milk coagulating enzyme, such as rennet, is added to the milk. A firm set is obtained after about 30 minutes from the time of addition of the rennet. The stirring agitators for the vat are stopped and the curd is cut vertically and horizontally using quarter-inch (6.35 mm) knives. After a healing period of about 5 minutes, the agitators are restarted at a speed of 10 to 12 rpm.

The curd is then cooked in the whey starting about 45 minutes from the set. The curd is cooked to a temperature of 98°F (36.7°C) in the whey over a period of 30 minutes. The agitator speed is gradually increased to 15 to 18 rpm during the cook.

The whey is drawn from the curd about 2 hours from the set time when the pH of the curd is in the range of from about 5.80 to about 6.05. Whey drainage is completed in about 15 minutes. Sufficient agitation is applied to the curd to prevent the curd from lumping. The curd is then rinsed with water and washed with approximately 45°F (7.2°C) water about 30 minutes from the start of the draw. The wash water is drained from the curd and the curd is salted. The curd is then filled into boxes which contain about 680 to 700 pounds (308.44 to 317.51 kg) of curd. Curd is pressed in the boxes by applying 30 psi (2.07 bar) air pressure to a plate in the box which is in an upright position for 2 to 5 minutes. A 70 to 90 psi (4.83 to 6.21 bar) pressure is used to block press the curd in the box. The curd in the box is then subjected to vacuum of about 26 inches to about 28 inches of Hg (about 0.15 to about 0.12 bar absolute) for a period of about 1 hour up to about 2 hours.

### Example 1

| Composition | Target | Acceptable Range |
|---|---|---|
| Moisture | 50.0% | 48-0 - 52.0% |
| Fat | 13.50% | 12.0 - 15.0% |
| Salt | 2.10% | 1.9 - 2.5% |
| pH | 5.1 | 4.90 - 5.5 |

Milk processing - Milk temperature should be 38° to 45°F (3.3 to 7.2°C). Properly filter milk in conformance with a triple filtration policy. Standardize the milk to produce a fat content in cheese of 13.50% +1.50% (usually between 1.05 - 1.35% of fat in the milk). Pasteurize milk at 163°F ±1°F (72.8 ±0.6°C) with 18 second hold time. Deliver milk to vats at 88°F ±1°F (31.1° ±0.6°C). Deliver milk to vats in manner which minimizes foam.

Starter - Add sufficient mesophilic lactococci (*S*. *lactis* and *S*. *cremoris*) starter culture and a ropy culture comprising a 50:50 mixture of *S*. *thermophilus* and *L*. *bulgaricus* to produce a draw pH target of 5.95, with range of 5.90 to 6.05 and an AM pH of 5.05. Allow milk to ripen 30 minutes at 88°F (31.1°C).

Vitamin A - Add 5 ml per 1000 lbs. (453.59 kg) of milk of Vitamin A Star Vite A (25). Mix measured amount of Vitamin A liquid into one gallon (3.79 liters) of milk, stirring completely. Add to vat 20 minutes prior to set.

Color - Add approximately 0.66 oz. single strength annatto color, diluted in water, per 1000 lb. milk (43.03 ml single strength annatto color, diluted in water, per 1000 kg milk) to achieve cheese grading #7 to 8 on the NCI color standard. Add when vat is about half full of milk. Do not use cheese color pail for adding any other ingredients.

Setting - Dilute coagulant in approximately 20 times coagulant volume of cool water immediately prior to use. Make certain dilution water contains no chlorine. Use sufficient amount of coagulant (2.3 oz. single strength per 1000 lb. milk [129.67 ml single strength per 1000 kg milk] to obtain firm set in 30 minutes. Stop agitators for 2 minutes after rennet addition.

Cutting - Cut curd vertically and horizontally using 1/4 inch (6.35 mm) knives. Cross cut using 1/4 inch (6.35 mm) knives. Take care to cut curd all the way to the vat wall on cross cut procedure. Allow 5 minutes healing time between cut and agitation. Start agitators at 10 to 12 rpm.

Cook - Start cook 45 minutes from set (15 minutes after start of cut). Cook to 98°F (36.7°C) in 30 minutes. Increase agitator speed gradually to 15 to 18 rpm during the cook.

Final Draw - Start final draw 1 hour, 55 minutes from set. The optimal range for curd pH at draw is 5.8 to 6.05, with a target of 5.9, with TA of 0.14 to 0.17%.

Whey removal - Pack - All free whey should be removed 20 minutes after start of draw. Provide sufficient agitation to prevent curd from lumping. The pack pH should be run 30 minutes from start of draw. pH range should be 5.60 to 5.80, with target of 5.70.

Curd rinse - The curd should be rinsed 30 minutes from start of draw. Wash the curd with approximately 45°F (7.2°C) water for 4 minutes from start of wash to water removal (vary to control moisture).

Salting - Ten minutes after the end of draining the curd, begin salting. Use enough salt to produce a finished product salt content of 2.10%. Apply salt in four equal applications. Spread each pail of salt over the curd evenly, allowing the agitator to make 1 complete pass between applications. Fork curd from ends of table after each application. Vary salt usage to achieve the finished product salt target. The optimal pH target at salting is 5.50 with a range of 5.40 to 5.65.

Filling - Begin boxing 5 minutes after all salt has been applied. Add sufficient curd to given block height of 28 inches (71.12 cm) and finished weight of 680 to 700 lbs. (308.44 to 317.51 kg).

Whey removal - Probe each block at 10 to 12 inches of Hg vacuum (0.66 to 0.60 bar absolute) for at least 7.5 minutes. Jog probes at least three times during probe period, moving probes at least 12 inches (30.48 cm).

Pressing - Apply 30 psi (2.07 bar) air pressure to box in upright position for 2 to 5 minutes. Apply high pressure (70 to 90 psi [4.83 to 6.21 bar]) to block press. Use vacuum hose to remove surplus whey from top of box. Tip block and press on monorail for 2.5 hours minimum.

Vacuuming - Vacuum blocks a minimum of 1 hour (preferably 2 hours) under full vacuum (26 inch to 28 inch [0.15 to 0.12 bar absolute]). Apply pressure to the blocks at 30 psi (2.07 bar) during the entire vacuum period.

Container sealing and cooling - Trim block edges and level surface of cheese as necessary. Close and seal box appropriately. Weigh box using appropriate tare weight (118.5 lb [53.75 kg] for container and 10 to 20 lb. (4.53 to 9.07 kg) for whey loss). Properly tag and identify each container. Cool blocks to center of block temperature of 40°F (4.4°C) in ten days. At 3 to 4 days, sample blocks with trier for composition and pH analysis. At ten days, remove from chill room and move into cure. At removal from chill room, check center of block temperature of 5 blocks per lot to verify efficacy of chill room. At removal from chill room, reweigh 5 blocks per day, randomly selected, to verify accuracy of whey loss weight allowance.

Compositional analysis and grading - One block from each vat is sampled for compositional analysis and pH when the cheese is 3 to 4 days of age.

### Example 2

A non-fat cheddar type natural cheese was prepared from 25,800 pounds (11702.68 kg) of skim milk having 0.08% fat using the process of Example 1. The final natural cheese had a fat content of 1.2% fat. After a three month shelf life, the texture of the cheese was slightly firm, broken and clean. The flavor was not bitter and had a slight casein overtone.

## Claims

1. A method for making a reduced fat natural cheddar-type cheese comprising:
(a) providing milk having from about 0.05% to about 2.0% milkfat;
(b) adding a culture system to said milk, said culture system comprising a lactic acid starter culture and a ropy culture, and fermenting said milk;
(c) setting said milk with a milk coagulating enzyme;
(d) cutting said milk to provide curd particles in whey;
(e) cooking said curd particles in said whey at a temperature below the optimum growth temperature of said ropy culture, and
(f) draining whey from said curd, knitting said curd, milling said knitted curd, forming said milled curd into blocks, pressing said blocks to remove additional whey and curing said blocks to provide a reduced fat natural cheddar-type cheese with improved flavor and texture.

2. A method according to claim 1, wherein said ropy culture is selected from the group consisting of *Streptococcus salivarius* subsp. *thermophilus* and *Lactobacillus delbrueckii ssp*. *bulgaricus*, *Streptococcus lactis ssp*. *hollandicus* and *Leuconostoc mesenteroidis ssp*. *dextranicum*

3. A method according to claim 1 or claim 2, wherein said ropy culture is a thermophilic species and said cook of said curd particles in whey is at a temperature below the optimum growth temperature of said ropy culture.

4. A method according to claim 1, wherein said ropy culture is a mesophilic species.

5. A method according to claim 1, wherein said ropy culture is a thermophilic species.

6. A method according to any one of claims 1 to 5, wherein proteolytic and lipolytic microorganisms are added to said milk prior to setting said milk.

7. A method according to any one of claims 1 to 6, wherein said natural cheddar-type cheese product is a reduced fat cheese having from about 1.2% fat to about 15% fat.

8. A method according to any one of claims 1 to 6, wherein said natural cheese cheddar-type cheese product is non-fat cheese having less than about 1.2% fat.
